# EUROPEAN PATENT APPLICATION

(11) **EP 2 818 299 A1**
(43) Date of publication of application: **31.12.2014**
(21) Application number: 14382244.3
(22) Date of filing: 24.06.2014
(51) Int. Cl.: B29C 45/44, B29C 45/00

(54) **Device for demolding parts**

(30) Priority: 25.06.2013 ES 201330954
(71) Applicant: Comercial de Utiles y Moldes, S.A., 08960 Sant Just Desvern, Barcelona (ES)
(72) Inventor: Navarra Pruna, Alberto, 08960 SANT JUST DESVERN (Barcelona) (ES)
(74) Representative: Carpintero Lopez, Francisco

(57) **Abstract**

The present invention relates to a device for demolding parts, comprising a clamp (1) movable between a molding position and a demolding position, and characterized in that said clamp (1) comprises a side notch (2) which, in the molding position, is in contact with a stop element (3), limiting the movement of said clamp (1).

Said device prevents the clamp from being locked inside its housing since the stop element prevents the upper surface of the clamp from being located below the upper surface of the mold.

## Description

The present invention relates to a device for demolding parts, comprising a clamp that ejects a molded part.

### Background of the Invention

There are different devices for demolding parts in the field of injection molding today. One of these devices comprises a clamp that can move vertically to push an already molded part, separating it from the mold.

These clamps known today have a frustoconical shape, in other words, in the portion of such clamps making an impression they are parallel to the demolding axis, but in the rear portion they have an adjusting cone (normally of 6-8°) which is placed in the cavity of the punch of the mold and therefore functions as a support so that the impression area to be molded is well fitted, and prevents burrs from being produced due to the lack of fit.

One drawback of devices for demolding comprising clamps known today is that the clamp can be locked inside its housing if the fit of the bell cone combined with the length of the clamp are not in perfect fit, the clamp tends to be interlocked in the cavity of the punch and in these cases, all the strength needed to unlock the clamp is directed at exerting pressure in the unlocking direction through the weakest area of the clamp, which is the area functioning as a spring.

All this entails a very significant deterioration of the service life of the spring area of the clamp, since this continuous interlocking and unlocking of the clamp decreases the mechanical strength of the spring and therefore the usefulness of the system.

The main challenge lies in the fact that the impression area of the clamp has a frustoconical shape and must be fitted in the entire geometry thereof, but it tends to be interlocked due to its actual shape.

To prevent this interlocking, the clamp must fit in the side walls and in the actual base at the same time so that it is completely fixed therein.

In practice, mechanically speaking, it is impossible to achieve this fit with conventional manufacturing systems and at an affordable cost for this application, so the objective of the present invention is to create an adjustable stop to fulfill this vital need in a simple and economical manner.

If the clamp is locked inside its housing, this represents a serious drawback in mold productivity since the usual pressure provided to the clamp for demolding is not enough to unlock the clamp.

Therefore, the main objective of the present invention is to provide a device for demolding which allows high productivity in a manner in which the clamp is not locked inside its housing.

### Description of the Invention

The mentioned drawbacks are solved with the device for demolding parts of the invention, having other advantages that will be described below.

The device for demolding parts of the present invention comprises a clamp movable between a molding position and an demolding position, and it is characterized in that said clamp comprises a side notch which, in the molding position, is in contact with a stop element, limiting the movement of said clamp, to prevent it from being interlocked in the housing and the clamp works smoothly.

As a result of this feature, the clamp is not locked inside its housing since the stop element prevents the upper surface of the clamp from being located below the upper surface of the mold.

Advantageously, said stop element is movably mounted in a support, such that the height thereof with respect to the upper surface of the mold can be adjusted.

According to a preferred embodiment, for adjusting said height, said stop element comprises a threaded hole in which a threaded rod of said support is housed.

Furthermore, said stop element preferably comprises a groove defining a front portion. Therefore, only the upper surface of said front portion has to be machined for it to have suitable dimensions.

According to a preferred embodiment, said side notch defines a horizontal surface and a vertical surface forming a substantially right angle, and said stop element comprises a planar surface which is in contact with said horizontal surface defined by the side notch in the molding position of the clamp.

### Brief Description of the Drawings

To better understand the foregoing, drawings in which a practical embodiment is schematically depicted only by way of non-limiting example are attached.
Figure 1 is a side view of the clamp of the device for demolding parts of the present invention;
Figure 2 is a schematic elevational view of the device for demolding parts of the present invention in the closed mold position;
Figure 3 is a schematic elevational view of the device for demolding parts of the present invention in the open mold position.

### Description of a Preferred Embodiment

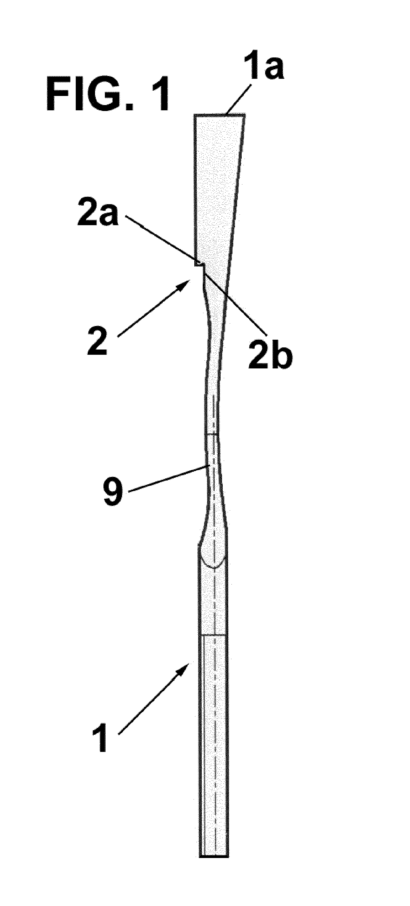

Figure 1 depicts a clamp 1 which is part of the device for demolding according to the present invention.

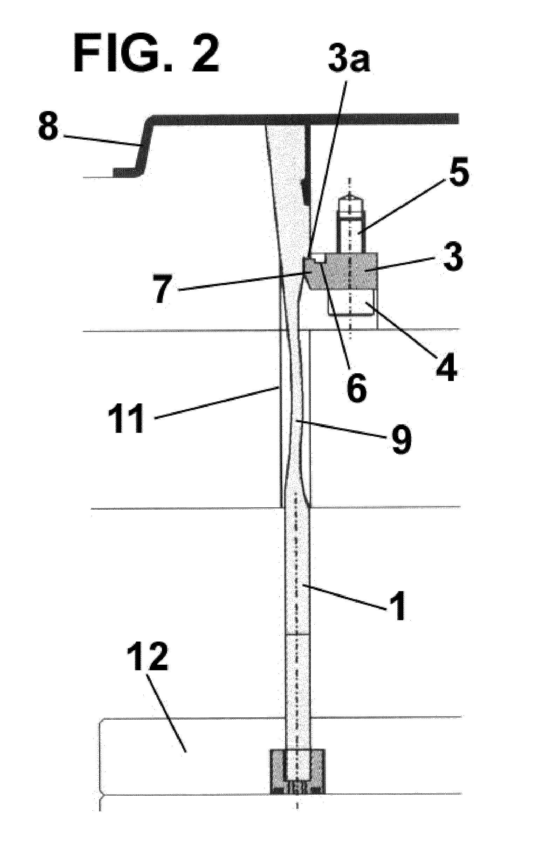

Said clamp 1 is elongated and comprises a planar surface 1a in its upper portion which will be in contact with the part 8 to be demolded, as seen in Figure 2.

Furthermore, said clamp 1 also comprises an intermediate area 9 thinner than the rest of the clamp 1, such that the upper portion can deviate slightly with respect to the vertical when demolding, as can be seen in Figure 2.

According to the invention, the clamp 1 comprises a side notch 2 defining a horizontal surface 2a and a vertical surface 2b, both surfaces 2a, 2b forming a substantially right angle.

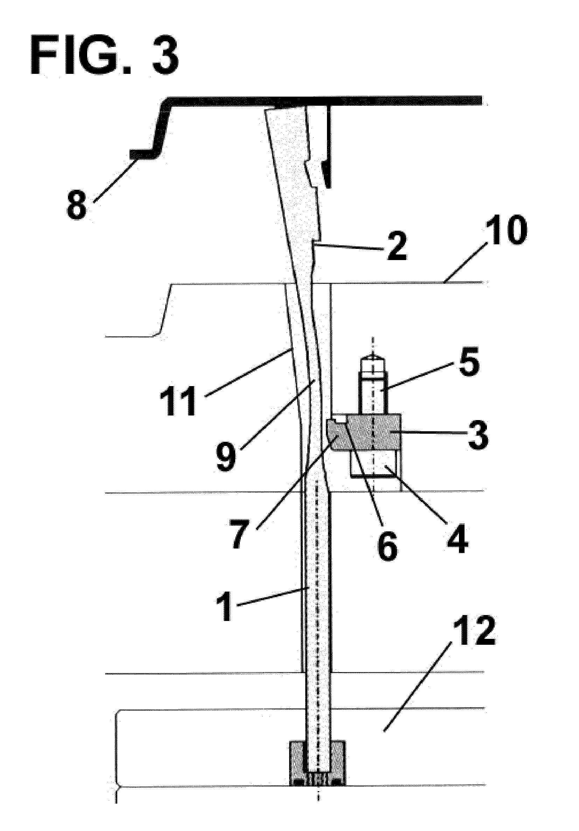

Said clamp 1 is housed in the mold inside a housing 11, such that it is vertically movable inside the housing 11 between a molding position (depicted in Figure 2) and a demolding position (depicted in Figure 3).

In the molding position, downward movement of the clamp 1 is limited by a stop element 3 abutting with said side notch 2 of said clamp 1, specifically, said stop element 3 comprises a planar surface 3a abutting with said horizontal surface 2a of the side notch 2.

Said stop element 3 is movable along a support 4, particularly along a threaded rod 5 of said support 4. To that end, said stop element 3 comprises a threaded hole (not seen in the drawings) in which said threaded rod 5 is housed. The position of said element of support 3 can thus be fitted with respect to the upper surface 10 of the mold.

Said stop element 3 also comprises a groove 6 defining a front portion 7 of the stop element 3, said front portion 7 having said aforementioned planar surface 3a. Therefore only said planar surface 3a can be machined, if necessary.

The function of this groove is to separate the fitting areas of the stop and to demarcate each of them so that they can be machined independently. If the front area is rectified, for every 0.1 mm that the support of the clamp is lowered, said clamp will move vertically 1 mm until reaching the support. However, if the rear portion is rectified, for every 0.1 mm that is rectified, , the support of the clamp will move up 1 mm. This method allows fitting the support of the clamp with complete precision, and it allows the impression wall, the rear support and the support stop to attain precise support at all times, which clearly entails the complete disappearance of the current "interlocking" problem of the clamp, thereby achieving a service life that is not limited to the perfect operation of the product.

In the molding position depicted in Figure 2, the clamp 1 is housed completely inside the housing 11, and the stop element 3 limits the downward movement of said clamp 1, such that an exact alignment between the upper surface 1a of the clamp and the upper surface 10 of the mold is achieved, preventing the clamp 1 from jamming.

When the part 8 is to be demolded, thrust plates 12 of the mold thrust the clamp 1 upwards (Figure 2), said clamp 1 deforms slightly as a result of the spring action exerted by said intermediate area 9 to enable demolding the part 8. During this upward thrust, the notch 2 is no longer in contact with the stop element 3, as seen in Figure 2.

Although reference has been made to a specific embodiment of the invention, it is obvious for a person skilled in the art that the described device for demolding parts is susceptible to multiple variations and modifications, and that all the mentioned details can be replaced by other technically equivalent details without departing from the scope of protection defined by the attached claims.

## Claims

1. Device for demolding parts, comprising a clamp (1) movable between a molding position and a demolding position, **characterized in that** said clamp (1) comprises a side notch (2) which is in contact with a stop element (3) in the molding position, limiting the movement of said clamp (1).

2. Device for demolding parts according to claim 1, wherein said stop element (3) is movably mounted in a support (4).

3. Device for demolding parts according to claim 2, wherein said stop element (3) comprises a threaded hole in which a threaded rod (5) of said support (4) is housed.

4. Device for demolding parts according to claim 1, wherein said stop element (3) comprises a groove (6) defining a front portion (7), separating and demarcating fitting areas of the stop element (3) so that they can be independently machined.

5. Device for demolding parts according to claim 1, wherein said side notch (2) defines a horizontal surface (2a) and a vertical surface (2b) forming a substantially right angle.

6. Device for demolding parts according to claims 1 and 5, wherein said stop element (3) comprises a planar surface (3a) which, in the molding position of the clamp (1), is in contact with said horizontal surface (2a) defined by the side notch (2).
